# EUROPÄISCHE PATENTSCHRIFT

(11) **EP 3 316 371 B1**
(45) Veröffentlichungstag und Bekanntmachung des Hinweises auf die Patenterteilung: **20.12.2023**
(21) Anmeldenummer: 17194692.4
(22) Anmeldetag: 04.10.2017
(51) Int. Cl.: H01M 8/04014, H01M 8/04089, H01M 8/0612, H01M 8/12

(54) **BRENNSTOFFZELLENVORRICHTUNG MIT DURCH KATHODENABGAS TEMPERIERTEM REFORMER**
FUEL CELL SYSTEM COMPRISING REFORMER HEATED BY CATHODE EXHAUST
SYSTÈME DE PILES À COMBUSTIBLE COMPRENANT UN REFORMEUR CHAUFFÉ PAR LES EFFLUENTS CATHODIQUES

(30) Priorität: 25.10.2016 DE 102016220978
(43) Veröffentlichungstag der Anmeldung: 02.05.2018
(73) Patentinhaber: Robert Bosch GmbH, 70442 Stuttgart (DE)
(72) Erfinder: Danne, Thomas, 71636 Ludwigsburg (DE); Hering, Martin, 71229 Leonberg (DE); Meise, Rene, 70195 Stuttgart (DE); Horstmann, Peter, 71229 Leonberg (DE); Gonzalez-Baquet, Tania, 71638 Ludwigsburg (DE); Wahl, Stefanie, 71691 Freiberg Am Neckar (DE)

(56) Entgegenhaltungen:
- DE-A1-102008 045 147
- US-A1- 2007 196 704
- US-A1- 2015 030 943

## Beschreibung

### Stand der Technik

Es ist bereits eine Brennstoffzellenvorrichtung, welche dazu vorgesehen ist, mit einem fluidischen Brennstoff betrieben zu werden, mit einer Brennstoffzelleneinheit und mit einer Reformereinheit, welche zu einer Erzeugung zumindest eines Brenngases vorgesehen ist, vorgeschlagen worden.

Die folgenden Dokumente beschreiben die Nutzung von Kathodenabgas zur Temperierung eines reformierten Gasgemisches bzw. zur direkten Beheizung eines Reformers: DE 10 2008 045147 A1, US 2015/030943 A1, US 2007/196704 A1.

### Offenbarung der Erfindung

Die Erfindung ist durch die in Anspruch 1 aufgeführten technischen Merkmale definiert. Weitere Ausführungsformen ergeben sich aus den untergeordneten Ansprüchen.

Die Erfindung geht aus von einer Brennstoffzellenvorrichtung, welche dazu vorgesehen ist, mit einem fluidischen Brennstoff betrieben zu werden, mit einer Brennstoffzelleneinheit und mit einer Reformereinheit, welche zu einer Erzeugung zumindest eines Brenngases vorgesehen ist.

Es wird vorgeschlagen, dass die Brennstoffzellenvorrichtung eine Temperiereinheit aufweist, welche dazu vorgesehen ist, der Reformereinheit zumindest einen Teil eines Kathodenabgases der Brennstoffzelleneinheit zur Temperierung der Reformereinheit zuzuführen.

Unter einer "Brennstoffzellenvorrichtung" soll in diesem Zusammenhang insbesondere ein, insbesondere funktionstüchtiger, Bestandteil, insbesondere eine Konstruktions- und/oder Funktionskomponente, eines Brennstoffzellensystems verstanden werden. Unter einem "Brennstoffzellensystem" soll in diesem Zusammenhang insbesondere ein System zu einer stationären und/oder mobilen Gewinnung, insbesondere elektrischer und/oder thermischer Energie, unter Verwendung zumindest einer Brennstoffzelleneinheit verstanden werden. Unter einer "Brennstoffzelleneinheit" soll in diesem Zusammenhang insbesondere eine Einheit mit zumindest einer Brennstoffzelle verstanden werden, welche dazu vorgesehen ist, zumindest eine chemische Reaktionsenergie zumindest eines, insbesondere kontinuierlich zugeführten, Brenngases, insbesondere Wasserstoff, und zumindest eines Oxidationsmittels, insbesondere Sauerstoff, insbesondere in elektrische Energie umzuwandeln. Die zumindest eine Brennstoffzelle kann insbesondere als Festoxid-Brennstoffzelle (SOFC) ausgebildet sein. Vorzugsweise umfasst die zumindest eine Brennstoffzelleneinheit eine Vielzahl von Brennstoffzellen, welche insbesondere in einem Brennstoffzellenstack angeordnet sind. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "fluidischen Brennstoff" soll in diesem Zusammenhang insbesondere ein gasförmiger oder flüssiger kohlenwasserstoffhaltiger Brennstoff verstanden werden. Insbesondere kann die Brennstoffzellenvorrichtung dazu vorgesehen sein, mit einem Erdgas betrieben zu werden. Unter einem "Erdgas" soll in diesem Zusammenhang insbesondere ein Gas und/oder Gasgemisch, insbesondere ein Naturgasgemisch, verstanden werden, welches vorzugsweise zumindest ein Alkan, insbesondere Methan, Ethan, Propan und/oder Butan, umfasst. Ferner kann das Erdgas weitere Bestandteile aufweisen, wie insbesondere Kohlenstoffdioxid und/oder Stickstoff und/oder Sauerstoff und/oder Schwefelverbindungen. Alternativ oder zusätzlich ist es denkbar, die Brennstoffzellenvorrichtung mit einem anderen insbesondere gasförmigen Brennstoff und/oder flüssigen Brennstoff, beispielsweise LPG, Benzin oder Diesel, zu betreiben.

Ferner kann die Brennstoffzellenvorrichtung insbesondere eine Entschwefelungseinheit, eine Reformereinheit und einen Rezikulationskreis umfassen. Unter einer "Entschwefelungseinheit" soll in diesem Zusammenhang insbesondere eine Einheit verstanden werden, welche dazu vorgesehen ist, vorzugsweise durch zumindest ein physikalisches und/oder chemisches Adsorptionsverfahren und/oder Absorptionsverfahren, einen Volumen- oder Molanteil an Schwefelverbindungen in dem fluidischen Brennstoff unter einen festgelegten Grenzwert zu senken und vorzugsweise zumindest im Wesentlichen aus dem fluidischen Brennstoff zu entfernen. Unter einer "Reformereinheit" soll in diesem Zusammenhang insbesondere eine chemisch-technische Einheit zu zumindest einer Aufbereitung zumindest eines kohlenwasserstoffhaltigen Brennstoffs, insbesondere durch eine Dampfreformierung, durch eine partielle Oxidation, durch eine autotherme Reformierung und/oder durch eine Kombination einer Dampfreformierung mit einer CO₂-Trockenreformierung, insbesondere zur Gewinnung des zumindest eines Brenngases, insbesondere Wasserstoff, verstanden werden. Vorzugsweise ist die Reformereinheit als Dampfreformereinheit ausgebildet. Unter einem "Rezirkulationskreis" soll in diesem Zusammenhang insbesondere eine Verbindungseinheit verstanden werden, die zu einem Transport von insbesondere flüssigen und/oder gasförmigen Stoffen und/oder Stoffgemischen vorgesehen ist. Insbesondere umfasst der Rezirkulationskreis zumindest eine Hohlleitung, beispielsweise zumindest eine Rohr- und/oder Schlauchleitung. Der Rezirkulationskreis ist insbesondere dazu vorgesehen, der Reformereinheit einen insbesondere festgelegten Prozentsatz eines, insbesondere wasserstoff- und/oder wasserdampfhaltigen, Abgases der Brennstoffzelle, insbesondere eines Anodenabgases, zuzuführen.

Unter einer "Temperiereinheit" soll in diesem Zusammenhang insbesondere eine Einheit verstanden werden, welche dazu vorgesehen ist, eine Einheit, Komponente und/oder Baugruppe der Brennstoffzellenvorrichtung durch ein Zuführen und/oder durch ein Abführen von thermischer Energie auf eine benötigte Prozesstemperatur zu bringen und/oder eine benötigte Prozesstemperatur zumindest im Wesentlichen zu halten. Insbesondere ist die Temperiereinheit dazu vorgesehen, der Reformereinheit eine für eine Reformierungsreaktion benötigte thermische Energie zuzuführen. Insbesondere umfasst die Temperiereinheit zumindest eine Fluidleitung, welche dazu vorgesehen ist, der Reformereinheit zumindest einen Teil eines heißen Kathodenabgases der Brennstoffzelleneinheit zur Bereitstellung der benötigten thermischen Energie zuzuführen. Insbesondere weist die Temperiereinheit zumindest eine Bypassleitung auf, welche dazu vorgesehen ist, zumindest einen Teilstrom eines Kathodenabgasstroms zu einer Temperierung der Reformereinheit umzuleiten. Unter einer "Bypassleitung" soll in diesem Zusammenhang insbesondere eine Fluidleitung verstanden werden, welche dazu vorgesehen ist, zumindest einen Teil eines Kathodenabgasstroms von einer Kathodenabgasleitung, welche dazu vorgesehen ist, das Kathodenabgas einer Kathode der Brennstoffzelleneinheit abzuführen, abzuzweigen und über die Reformereinheit umzuleiten.

Durch eine derartige Ausgestaltung kann eine gattungsgemäße Brennstoffzellenvorrichtung mit verbesserten Eigenschaften hinsichtlich einer Temperierung einer Reformereinheit bereitgestellt werden. Insbesondere kann durch die Zuführung eines Kathodenabgases eine vorteilhafte Temperierung unter Verwendung einer thermischen Verlustleistung einer Brennstoffzelleneinheit erreicht werden.

Ferner wird vorgeschlagen, dass die Temperiereinheit zumindest einen Wärmeübertrager aufweist, welcher dazu vorgesehen ist, thermische Energie von dem Teil des Kathodenabgases auf die Reformereinheit zu übertragen. Insbesondere kann der Wärmeübertrager zumindest teilweise in und/oder an der Reformereinheit angeordnet sein. Die Temperiereinheit weist zumindest einen Wärmeübertrager auf, welcher zumindest teilweise einstückig mit der Reformereinheit ausgebildet ist und welcher dazu vorgesehen ist, thermische Energie von dem Teil des Kathodenabgases auf die Reformereinheit zu übertragen. Alternativ oder zusätzlich kann der Wärmeübertrager zumindest teilweise als ein Wärmeübertrager ausgebildet sein. Unter einem "Wärmeübertrager" soll in diesem Zusammenhang insbesondere eine Einheit verstanden werden, welche dazu vorgesehen ist, Wärme in Richtung eines Temperaturgefälles zwischen zumindest zwei insbesondere fluiden Stoffströmen zu übertragen, insbesondere in einem Gegenstrombetrieb, Kreuzstrombetrieb und/oder Gleichstromprinzip. Der Wärmeübertrager ist insbesondere dazu vorgesehen, Wärme von dem Kathodenabgas der Brennstoffzelleneinheit auf einen Prozessraum der Reformereinheit zu übertragen. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Insbesondere wird dem Wärmeübertrager während eines Betriebs der Brennstoffzellenvorrichtung insbesondere kontinuierlich zumindest ein Teil eines Kathodenabgases der Brennstoffzelleneinheit zugeführt. Hierdurch kann die Reformereinheit vorteilhaft einfach und/oder effizient auf eine benötigte Prozesstemperatur temperiert werden. Des Weiteren wird vorgeschlagen, dass die Temperiereinheit zumindest eine Steuer- und/oder Regeleinheit aufweist, welche dazu vorgesehen ist, eine Temperatur der Reformereinheit zu steuern und/oder zu regeln. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Insbesondere ist die Steuer- und/oder Regeleinheit dazu vorgesehen, die Temperatur der Reformereinheit derart zu steuern und/oder zu regeln, dass eine Methankonzentration eines innerhalb der Reformereinheit gewonnenen und der Brennstoffzelleneinheit anodenseitig zugeführten Reformats einer Anforderung der Brennstoffzelleneinheit zumindest im Wesentlichen entspricht. Hierdurch kann vorteilhaft eine Temperatur der Reformereinheit und somit eine Methankonzentration an einem Anodeneingang der Brennstoffzelleneinheit geregelt werden. Ferner kann eine Stellgröße für eine Regelung einer Temperatur der Brennstoffzelleneinheit bereitgestellt werden. Dies kann eine Systemflexibilität insbesondere gegenüber einer falschen Auslegung, geänderter Anforderungen der Brennstoffzelleneinheit, beispielsweise bedingt durch Degradation und/oder einen Austausch der Brennstoffzelleneinheit, vorteilhaft erhöhen.

Die Temperiereinheit weist zumindest ein Ventil auf, welches dazu vorgesehen ist, einen Volumenstrom des der Reformereinheit zugeführten Teils des Kathodenabgases zu regeln. Insbesondere kann das Ventil als ein insbesondere elektromagnetisches und/oder elektromotorisches Proportionalventil ausgebildet sein. Insbesondere ist das Ventil der Reformereinheit, strömungstechnisch vorgeschaltet. Alternativ oder zusätzlich kann die Temperiereinheit eine Klappe, insbesondere eine Drosselklappe aufweisen, welche dazu vorgesehen ist, den Volumenstrom des der Reformereinheit zugeführten Teils des Kathodenabgases zu regeln. Insbesondere ist das Ventil dazu vorgesehen, zumindest einen Teilstrom des Kathodenabgases der Brennstoffzelleneinheit in die Bypassleitung der Temperiereinheit einzuleiten. Hierdurch kann eine vorteilhaft einfache Regelung einer Temperatur der Reformereinheit erfolgen.

In einer Ausgestaltung der Erfindung wird vorgeschlagen, dass die Temperiereinheit zumindest einen der Reformereinheit strömungstechnisch vorgeschalteten Wärmeübertrager aufweist, welcher dazu vorgesehen ist, eine Temperatur des der Reformereinheit zugeführten Teils des Kathodenabgases einzustellen. Vorzugsweise ist dem der Reformereinheit vorgeschalteten Wärmeübertrager ein regelbarer Volumenstrom eines Kühlmediums, insbesondere eines Kathodengases, vorzugsweise Luft, zuführbar. Der der Reformereinheit strömungstechnisch vorgeschaltete Wärmeübertrager ist insbesondere innerhalb der Bypassleitung angeordnet. Insbesondere kann der der Reformereinheit vorgeschaltete Wärmeübertrager mit einem Ventil kombiniert sein, wobei der Wärmeübertrager dem Ventil strömungstechnisch nachgeschaltet ist. Hierdurch kann eine vorteilhaft genaue Regelung einer der Reformereinheit zugeführten thermischen Energie und/oder der Reformertemperatur ermöglicht werden.

Zudem wird ein Brennstoffzellensystem mit zumindest einer erfindungsgemäßen Brennstoffzellenvorrichtung vorgeschlagen. Hierdurch kann ein Brennstoffzellensystem mit verbesserten Eigenschaften hinsichtlich einer Temperierung einer Reformereinheit bereitgestellt werden. Insbesondere kann durch die Zuführung eines Kathodenabgases eine vorteilhafte Temperierung unter Verwendung einer thermischen Verlustleistung einer Brennstoffzelleneinheit erreicht werden.

Ferner wird ein Verfahren zum Betrieb einer Brennstoffzellenvorrichtung vorgeschlagen, welche dazu vorgesehen ist, mit einem fluidischen Brennstoff betrieben zu werden, und welche eine Brennstoffzelleneinheit und eine Reformereinheit aufweist, welche zu einer Erzeugung zumindest eines Brenngases vorgesehen ist, wobei die Reformereinheit mittels eines Kathodenabgases der Brennstoffzelleneinheit temperiert wird. Hierdurch kann eine vorteilhaft regelbare Temperierung der Reformereinheit unter Verwendung einer thermischen Verlustleistung einer Brennstoffzelleneinheit erreicht werden.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Brennstoffzellensystems mit einer Temperiereinheit zur Temperierung einer Reformereinheit mittels eines Kathodenabgases und
- Fig. 2: eine schematische Darstellung eines Brennstoffzellensystems mit einer alternativen Temperiereinheit zur Temperierung einer Reformereinheit mittels eines Kathodenabgases.

### Beschreibung der Ausführungsbeispiele

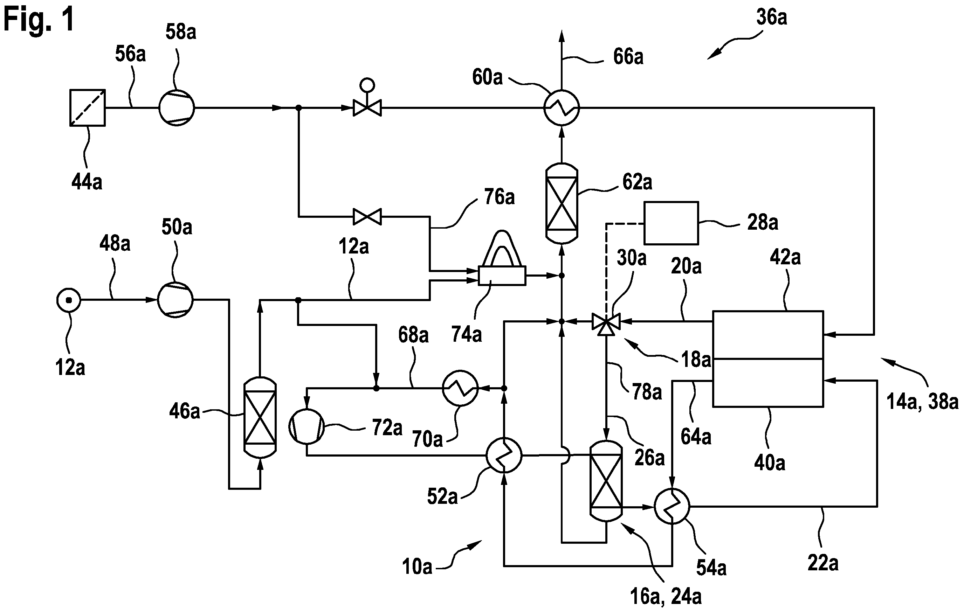

Figur 1 zeigt eine schematische Darstellung eines Brennstoffzellensystems 36a mit einer Brennstoffzellenvorrichtung 10a. Die Brennstoffzellenvorrichtung 10a ist dazu vorgesehen, mit einem fluidischen Brennstoff 12a, beispielsweise Erdgas, betrieben zu werden. Die Brennstoffzellenvorrichtung 10a weist eine Brennstoffzelleneinheit 14a auf. Die Brennstoffzelleneinheit 14a ist hier vereinfacht als eine Brennstoffzelle 38a dargestellt. Zweckmäßig ist jedoch eine Ausbildung einer Brennstoffzelleneinheit als ein Brennstoffzellenstack mit einer Vielzahl von Brennstoffzellen. Die Brennstoffzelleneinheit 14a weist eine Anode 40a und eine Kathode 42a auf. Der Anode 40a wird während eines Betriebs der Brennstoffzelleneinheit 14a ein aus dem Brennstoff 12a gewonnenes Brenngas 22a, insbesondere Wasserstoff, zugeführt. Der Kathode 42a wird während eines Betriebs der Brennstoffzelleneinheit 14a ein Kathodengas 44a, insbesondere Luftsauerstoff, zugeführt. Ferner weist die Brennstoffzellenvorrichtung 10a eine der Brennstoffzelleneinheit 14a strömungstechnisch vorgeschaltete Entschwefelungseinheit 46a auf. Die Entschwefelungseinheit 46a ist dazu vorgesehen, den Brennstoff 12a zumindest teilweise zu entschwefeln. Zur Gewinnung des Brenngases 22a weist die Brennstoffzellenvorrichtung 10a eine der Entschwefelungseinheit 46a strömungstechnisch nachgeschaltete Reformereinheit 16a auf.

Der Brennstoff 12a wird während eines Betriebs der Brennstoffzelleneinheit 14a über eine Versorgungsleitung 48a in das Brennstoffzellensystem 36a eingespeist. Der Brennstoff 12a wird mittels eines Verdichters 50a gefördert. Vor Eintritt in die Reformereinheit 16a wird der entschwefelte Brennstoff 12a mittels eines Wärmeübertragers 52a auf eine Prozesstemperatur erwärmt. Das aus der Reformereinheit 16a austretende Brenngas 22a wird vor Eintritt in die Anode 40a der Brennstoffzelleneinheit 14a mittels eines weiteren Wärmeübertragers 54a temperiert. Das Kathodengas 44a wird über eine weitere Versorgungsleitung 56a in das Brennstoffzellensystem 36a eingespeist. Das Kathodengas 44a wird mittels eines Verdichters 58a gefördert. Vor Eintritt in die Kathode 42a der Brennstoffzelleneinheit 14a wird das Kathodengas 44a mittels eines weiteren Wärmeübertragers 60a erwärmt.

Ferner weist die Brennstoffzellenvorrichtung 10a einen Nachbrenner 62a auf. Der Nachbrenner 62a ist der Brennstoffzelleneinheit 14a strömungstechnisch nachgeschaltet. Dem Nachbrenner 62a wird ein Teil eines Anodenabgases 64a der Brennstoffzelleneinheit 14a zugeführt. Der Nachbrenner 62a ist dazu vorgesehen, in dem Anodenabgas 64a der Brennstoffzelleneinheit 14a verbliebene brennbare Stoffe, insbesondere nicht umgesetzten Wasserstoff, zu verbrennen. Ein für einen Betrieb des Nachbrenners 62a benötigter Sauerstoff wird dem Nachbrenner 62a in Form eines Kathodenabgases 20a der Brennstoffzelleneinheit 14a zugeführt. Ein Abgas 66a des Nachbrenners 62a wird aus dem Brennstoffzellensystem 36a ausgeleitet. Die Brennstoffzellenvorrichtung 10a weist ferner einen Rezirkulationskreis 68a auf, welcher zu einer teilweisen Rezirkulation des wasserstoff- und wasserhaltigen Anodenabgases 64a der Brennstoffzelleneinheit 14a vorgesehen ist. Der Rezirkulationskreis 68a ist insbesondere dazu vorgesehen, das Anodenabgas 64a der Brennstoffzelleneinheit 14a zumindest teilweise zur Vermischung mit dem Brennstoff 12a zurückzuführen. Innerhalb des Rezirkulationskreises 68a ist ein Wärmeübertrager 70a angeordnet, welcher dazu vorgesehen ist, das Anodenabgas 64a zu kühlen. Ferner ist ein Verdichter 72a in dem Rezirkulationskreis 68a angeordnet. Durch die Rezirkulation des Anodenabgases 64a kann Wasserdampf aus einem Reaktionsvorgang in der Brennstoffzelleneinheit 14a zur Reformierung des Brennstoffs 12a innerhalb der Reformereinheit 16a verwendet werden. Ferner kann nicht umgesetzter Wasserstoff in die Brennstoffzelleneinheit 14a zurückgeführt werden, wodurch ein Brennstoffnutzungsgrad erhöht werden kann. Des Weiteren weist die Brennstoffzellenvorrichtung 10a einen Startbrenner 74a auf. Während eines Hochfahrens der Brennstoffzelleneinheit 14a wird der Brennstoff 12a und Luft 76a dem Startbrenner 74a, welcher dazu vorgesehen ist, das Kathodengas 44a während des Hochfahrens aufzuheizen, zugeführt. Über das aufgeheizte Kathodengas 44a wird die Brennstoffzellenvorrichtung 10a, insbesondere die Brennstoffzelleneinheit 14a, auf eine Betriebstemperatur erwärmt.

Ferner weist die Brennstoffzellenvorrichtung 10a eine Temperiereinheit 18a auf, welche dazu vorgesehen ist, der Reformereinheit 16a zumindest einen Teil 26a des Kathodenabgases 20a der Brennstoffzelleneinheit 14a zur Temperierung der Reformereinheit 16a zuzuführen. Die Temperiereinheit 18a weist eine Bypassleitung 78a auf, welche dazu vorgesehen ist, zumindest einen Teil 26a des Kathodenabgases 20a zu einer Temperierung der Reformereinheit 16a umzuleiten. Die Temperiereinheit 18a weist ferner einen Wärmeübertrager 24a auf, welcher dazu vorgesehen ist, thermische Energie von dem Teil 26a des Kathodenabgases 20a auf die Reformereinheit 16a zu übertragen. Der Wärmeübertrager 24a ist einstückig mit der Reformereinheit 16a ausgebildet. Alternativ oder zusätzlich kann die Reformereinheit 16a selber zumindest teilweise als ein Wärmeübertrager ausgebildet sein. Die Temperiereinheit 18a weist eine Steuer- und/oder Regeleinheit 28a auf, welche dazu vorgesehen ist, eine Temperatur der Reformereinheit 16a zu steuern und/oder zu regeln. Ferner weist die Temperiereinheit 18a ein Ventil 30a auf, welches dazu vorgesehen ist, einen Volumenstrom des der Reformereinheit 16a zugeführten Teils 26a des Kathodenabgases 20a zu regeln. Insbesondere kann das Ventil 30a als ein insbesondere elektromagnetisches und/oder elektromotorisches Proportionalventil ausgebildet sein. Das Ventil 30a ist hier beispielhaft als ein Dreiwegeventil ausgebildet. Alternativ oder zusätzlich zu dem Ventil 30a kann die Temperiereinheit 18a eine Klappe, insbesondere eine Drosselklappe aufweisen, welche dazu vorgesehen ist, den Volumenstrom des der Reformereinheit 16a zugeführten Teils 26a des Kathodenabgases 20a zu regeln. Insbesondere ist das Ventil 30a dazu vorgesehen, das Kathodenabgas 20a in zwei Teilströme aufzuteilen, wobei zumindest ein Teil 26a des Kathodenabgases 20a in die Bypassleitung 78a der Temperiereinheit 18a eingeleitet wird. Das Ventil 30a ist mittelbar und/oder unmittelbar durch die Steuer- und/oder Regeleinheit 28a ansteuerbar.

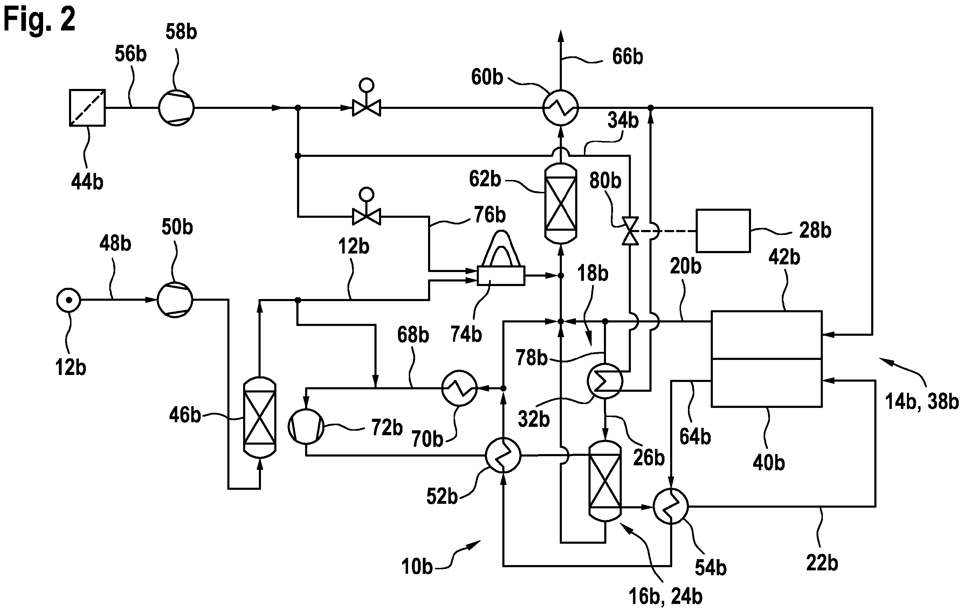

In Figur 2 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in Figur 1 nachgestellt. In dem Ausführungsbeispiel der Figur 2 ist der Buchstabe a durch den Buchstaben b ersetzt.

Figur 2 zeigt eine schematische Darstellung eines Brennstoffzellensystems 36b mit einer alternativen Brennstoffzellenvorrichtung 10b. Die Brennstoffzellenvorrichtung 10b ist dazu vorgesehen, mit einem fluidischen Brennstoff 12b, beispielsweise Erdgas, betrieben zu werden. Die Brennstoffzellenvorrichtung 10b weist eine Brennstoffzelleneinheit 14b auf. Die Brennstoffzelleneinheit 14b ist hier vereinfacht als eine Brennstoffzelle 38b dargestellt. Zweckmäßig ist jedoch eine Ausbildung einer Brennstoffzelleneinheit als ein Brennstoffzellenstack mit einer Vielzahl von Brennstoffzellen. Die Brennstoffzelleneinheit 14b weist eine Anode 40b und eine Kathode 42b auf. Der Anode 40b wird während eines Betriebs der Brennstoffzelleneinheit 14b ein aus dem Brennstoff 12b gewonnenes Brenngas 22b, insbesondere Wasserstoff, zugeführt. Der Kathode 42b wird während eines Betriebs der Brennstoffzelleneinheit 14b ein Kathodengas 44b, insbesondere Luftsauerstoff, zugeführt. Ferner weist die Brennstoffzellenvorrichtung 10b eine der Brennstoffzelleneinheit 14b strömungstechnisch vorgeschaltete Entschwefelungseinheit 46b auf. Die Entschwefelungseinheit 46b ist dazu vorgesehen, den Brennstoff 12b zumindest teilweise zu entschwefeln. Zur Gewinnung des Brenngases 22b weist die Brennstoffzellenvorrichtung 10b eine der Entschwefelungseinheit 46b strömungstechnisch nachgeschaltete Reformereinheit 16b auf.

Der Brennstoff 12b wird während eines Betriebs der Brennstoffzelleneinheit 14b über eine Versorgungsleitung 48b in das Brennstoffzellensystem 36b eingespeist. Der Brennstoff 12b wird mittels eines Verdichters 50a gefördert. Vor Eintritt in die Reformereinheit 16b wird der entschwefelte Brennstoff 12b mittels eines Wärmeübertragers 52b auf eine Prozesstemperatur erwärmt. Das aus der Reformereinheit 16b austretende Brenngas 22b wird vor Eintritt in die Anode 40a der Brennstoffzelleneinheit 14b mittels eines weiteren Wärmeübertragers 54b temperiert. Das Kathodengas 44b wird über eine weitere Versorgungsleitung 56b in das Brennstoffzellensystem 36b eingespeist. Das Kathodengas 44b wird mittels eines Verdichters 58b gefördert. Vor Eintritt in die Kathode 42b der Brennstoffzelleneinheit 14b wird das Kathodengas 44b mittels eines weiteren Wärmeübertragers 60b erwärmt.

Ferner weist die Brennstoffzellenvorrichtung 10b einen Nachbrenner 62b auf. Der Nachbrenner 62b ist der Brennstoffzelleneinheit 14b strömungstechnisch nachgeschaltet. Dem Nachbrenner 62b wird ein Teil eines Anodenabgases 64b der Brennstoffzelleneinheit 14b zugeführt. Der Nachbrenner 62b ist dazu vorgesehen, in dem Anodenabgas 64b der Brennstoffzelleneinheit 14b verbliebene brennbare Stoffe, insbesondere nicht umgesetzten Wasserstoff, zu verbrennen. Ein für einen Betrieb des Nachbrenners 62b benötigter Sauerstoff wird dem Nachbrenner 62b in Form eines Kathodenabgases 20b der Brennstoffzelleneinheit 14b zugeführt. Ein Abgas 66b des Nachbrenners 62b wird aus dem Brennstoffzellensystem 36b ausgeleitet. Die Brennstoffzellenvorrichtung 10b weist ferner einen Rezirkulationskreis 68b auf, welcher zu einer teilweisen Rezirkulation des wasserstoff- und wasserhaltigen Anodenabgases 64b der Brennstoffzelleneinheit 14b vorgesehen ist. Der Rezirkulationskreis 68b ist insbesondere dazu vorgesehen, das Anodenabgas 64b der Brennstoffzelleneinheit 14b zumindest teilweise zur Vermischung mit dem Brennstoff 12b zurückzuführen. Innerhalb des Rezirkulationskreises 68b ist ein Wärmeübertrager 70b angeordnet, welcher dazu vorgesehen ist das Anodenabgas 64b zu kühlen. Ferner ist ein Verdichter 72b in dem Rezirkulationskreis 68b angeordnet. Durch die Rezirkulation des Anodenabgases 64b kann Wasserdampf aus einem Reaktionsvorgang in der Brennstoffzelleneinheit 14b zur Reformierung des Brennstoffs 12b innerhalb der Reformereinheit 16b verwendet werden. Ferner kann nicht umgesetzter Wasserstoff in die Brennstoffzelleneinheit 14b zurückgeführt werden, wodurch ein Brennstoffnutzungsgrad erhöht werden kann. Des Weiteren weist die Brennstoffzellenvorrichtung 10b einen Startbrenner 74b auf. Während eines Hochfahrens der Brennstoffzelleneinheit 14b wird der Brennstoff 12b und Luft 76b dem Startbrenner 74b, welcher dazu vorgesehen ist, das Kathodengas 44b während des Hochfahrens aufzuheizen, zugeführt. Über das aufgeheizte Kathodengas 44b wird die Brennstoffzellenvorrichtung 10b, insbesondere die Brennstoffzelleneinheit 14b, auf eine Betriebstemperatur erwärmt.

Ferner weist die Brennstoffzellenvorrichtung 10b eine Temperiereinheit 18b auf, welche dazu vorgesehen ist, der Reformereinheit 16b zumindest einen Teil 26b des Kathodenabgases 20b der Brennstoffzelleneinheit 14b zur Temperierung der Reformereinheit 16b zuzuführen. Die Temperiereinheit 18b weist eine Bypassleitung 78b auf, welche dazu vorgesehen ist, zumindest einen Teil 26b des Kathodenabgases 20b zu einer Temperierung der Reformereinheit 16b umzuleiten. Die Temperiereinheit 18b weist ferner einen Wärmeübertrager 24b auf, welcher dazu vorgesehen ist, thermische Energie von dem Teil 26b des Kathodenabgases 20b auf die Reformereinheit 16b zu übertragen. Der Wärmeübertrager 24b ist einstückig mit der Reformereinheit 16b ausgebildet. Alternativ oder zusätzlich kann die Reformereinheit 16b selber zumindest teilweise als ein Wärmeübertrager ausgebildet sein. Die Temperiereinheit 18b weist eine Steuer- und/oder Regeleinheit 28b auf, welche dazu vorgesehen ist, eine Temperatur der Reformereinheit 16b zu steuern und/oder zu regeln. Ferner weist die Temperiereinheit 18b einen der Reformereinheit 16b strömungstechnisch vorgeschalteten Wärmeübertrager 32b auf, welcher dazu vorgesehen ist, eine Temperatur des der Reformereinheit 16b zugeführten Teils 26b des Kathodenabgases 20b einzustellen. Der der Reformereinheit 16b vorgeschaltete Wärmeübertrager 32b ist in der Bypassleitung 78b angeordnet. Dem der Reformereinheit 16b vorgeschalteten Wärmeübertrager 32b ist ein regelbarer Volumenstrom eines Kühlmediums 34b zuführbar. Ein Ventil 80b zur Regelung des Volumenstroms des Kühlmediums 34b ist mittelbar und/oder unmittelbar durch die Steuer- und/oder Regeleinheit 28a ansteuerbar.

## Patentansprüche

1. Brennstoffzellenvorrichtung, welche dazu vorgesehen ist, mit einem fluidischen Brennstoff (12a; 12b) betrieben zu werden, mit einer Brennstoffzelleneinheit (14a; 14b) und mit einer Reformereinheit (16a; 16b), welche zu einer Erzeugung zumindest eines Brenngases (22a; 22b) vorgesehen ist, wobei die Brennstoffzellenvorrichtung eine Temperiereinheit (18a; 18b) aufweist, welche dazu vorgesehen ist, der Reformereinheit (16a; 16b) zumindest einen Teil (26a; 26b) eines Kathodenabgases (20a; 20b) der Brennstoffzelleneinheit (14a; 14b) zur Temperierung der Reformereinheit (16a; 16b) zuzuführen, wobei die Temperiereinheit (18a; 18b) zumindest einen Wärmeübertrager (24a; 24b) aufweist, welcher zumindest teilweise einstückig mit der Reformereinheit (16a; 16b) ausgebildet ist und welcher dazu vorgesehen ist, thermische Energie von dem Teil (26a; 26b) des Kathodenabgases (20a; 20b) auf die Reformereinheit (16a; 16b) zu übertragen, **dadurch gekennzeichnet, dass** die Temperiereinheit (18a) zumindest ein Ventil (30a) aufweist, welches dazu vorgesehen ist, einen Volumenstrom des der Reformereinheit (16a) zugeführten Teils (26a) des Kathodenabgases (20a) zu regeln.

2. Brennstoffzellenvorrichtung nach Anspruch 1, **dadurch gekennzeichnet, dass** die Temperiereinheit (18a; 18b) zumindest einen Wärmeübertrager (24a; 24b) aufweist, welcher dazu vorgesehen ist, thermische Energie von dem Teil (26a; 26b) des Kathodenabgases (20a; 20b) auf die Reformereinheit (16a; 16b) zu übertragen.

3. Brennstoffzellenvorrichtung nach einem der vorhergehenden Ansprüche, **dadurch gekennzeichnet, dass** die Temperiereinheit (18a; 18b) zumindest eine Steuer- und/oder Regeleinheit (28a; 28b) aufweist, welche dazu vorgesehen ist, eine Temperatur der Reformereinheit (16a; 16b) zu steuern und/oder zu regeln.

4. Brennstoffzellenvorrichtung nach einem der vorhergehenden Ansprüche, **dadurch gekennzeichnet, dass** die Temperiereinheit (18b) zumindest einen der Reformereinheit (16b) strömungstechnisch vorgeschalteten Wärmeübertrager (32b) aufweist, welcher dazu vorgesehen ist, eine Temperatur des der Reformereinheit (16b) zugeführten Teils (26b) des Kathodenabgases (20b) einzustellen.

5. Brennstoffzellenvorrichtung nach Anspruch 4, **dadurch gekennzeichnet, dass** dem der Reformereinheit (16b) vorgeschalteten Wärmeübertrager (32b) ein regelbarer Volumenstrom eines Kühlmediums (34b) zuführbar ist.

6. Brennstoffzellensystem mit zumindest einer Brennstoffzellenvorrichtung (10a; 10b) nach einem der vorhergehenden Ansprüche.

7. Verfahren zum Betrieb einer Brennstoffzellenvorrichtung (10a; 10b) nach einem der Ansprüche 1 bis 5, welche dazu vorgesehen ist, mit einem fluidischen Brennstoff (12a; 12b) betrieben zu werden und welche eine Brennstoffzelleneinheit (14a; 14b) und eine Reformereinheit (16a; 16b) aufweist, welche zu einer Erzeugung zumindest eines Brenngases (22a; 22b) vorgesehen ist, **dadurch gekennzeichnet, dass** die Reformereinheit (16a; 16b) mittels eines Kathodenabgases (20a; 20b) der Brennstoffzelleneinheit (14a; 14b) temperiert wird.

## Claims

1. Fuel-cell device which is intended for being operated with a fluidic fuel (12a; 12b), having a fuel-cell unit (14a; 14b) and having a reformer unit (16a; 16b) which is intended for producing at least one combustion gas (22a; 22b), wherein the fuel-cell device comprises a temperature-control unit (18a; 18b) which is intended for feeding at least a part (26a; 26b) of a cathode exhaust gas (20a; 20b) of the fuel-cell unit (14a;14b) to the reformer unit (16a; 16b) for the purpose of controlling the temperature of the reformer unit (16a; 16b), wherein the temperature-control unit (18a; 18b) has at least one heat exchanger (24a; 24b) which is at least partially formed in one piece with the reformer unit (16a; 16b) and which is intended for transferring thermal energy from the part (26a; 26b) of the cathode exhaust gas (20a; 20b) to the reformer unit (16a; 16b), **characterized in that** the temperature-control unit (18a) has at least one valve (30a) which is intended for regulating a volume flow of the part (26a) of the cathode exhaust gas (20a) that is fed to the reformer unit (16a).

2. Fuel-cell device according to Claim 1, **characterized in that** the temperature-control unit (18a; 18b) has at least one heat exchanger (24a; 24b) which is intended for transferring thermal energy from the part (26a; 26b) of the cathode exhaust gas (20a; 20b) to the reformer unit (16a; 16b).

3. Fuel-cell device according to either of the preceding claims, **characterized in that** the temperature-control unit (18a; 18b) has at least one control and/or regulating unit (28a; 28b) which is intended for controlling and/or regulating a temperature of the reformer unit (16a; 16b).

4. Fuel-cell device according to one of the preceding claims, **characterized in that** the temperature-control unit (18b) has at least one heat exchanger (32b) which is connected before the reformer unit (16b) in terms of flow and which is intended for setting a temperature of the part (26b) of the cathode exhaust gas (20b) that is fed to the reformer unit (16b).

5. Fuel-cell device according to Claim 4, **characterized in that** a regulable volume flow of a cooling medium (34b) is able to be fed to the heat exchanger (32b) connected before the reformer unit (16b).

6. Fuel-cell system having at least one fuel-cell device (10a; 10b) according to one of the preceding claims.

7. Method for operating a fuel-cell device (10a; 10b) according to one of Claims 1 to 5, which is intended for being operated with a fluidic fuel (12a; 12b) and which has a fuel-cell unit (14a; 14b) and a reformer unit (16a; 16b) which is intended for producing at least one combustion gas (22a; 22b), **characterized in that** the temperature of the reformer unit (16a; 16b) is controlled by means of a cathode exhaust gas (20a; 20b) of the fuel-cell unit (14a; 14b).

## Revendications

1. Dispositif de piles à combustible, qui est conçu pour fonctionner avec un combustible fluide (12a ; 12b), comportant une unité de piles à combustible (14a ; 14b) et comportant une unité de reformeur (16a ; 16b), qui est conçu pour la production d'au moins un gaz combustible (22a ; 22b), dans lequel le dispositif de pile à combustible comprend une unité de régulation de température (18a ; 18b), qui est conçue pour alimenter l'unité de reformeur (16a ; 16b) avec au moins une partie (26a ; 26b) d'un effluent cathodique (20a ; 20b) de l'unité de piles à combustible (14a ; 14b) pour la régulation de température de l'unité de reformeur (16a ; 16b), dans lequel l'unité de régulation de température (18a ; 18b) comprend au moins un échangeur thermique (24a ; 24b) qui est réalisé au moins partiellement d'une seule pièce avec l'unité de reformeur (16a ; 16b) et qui est conçu pour transmettre l'énergie thermique de la partie (26a, 26b) de l'effluent cathodique (20a ; 20b) vers l'unité de reformeur (16a ; 16b), **caractérisé en ce que** l'unité de régulation de la température (18a) comprend au moins une soupape (30a) qui est conçue pour réguler un débit volumique de la partie (26a) de l'effluent cathodique (20a) introduite dans l'unité de reformeur (16a).

2. Dispositif de piles à combustible selon la revendication 1, **caractérisé en ce que** l'unité de régulation de température (18a ; 18b) comprend au moins un échangeur thermique (24a ; 24b) qui est conçu pour transmettre de l'énergie thermique de la partie (26a, 26b) de l'effluent cathodique (20a ; 20b) à l'unité de reformeur (16a ; 16b).

3. Dispositif de piles à combustible selon l'une des revendications précédentes, **caractérisé en ce que** l'unité de régulation de température (18a ; 18b) comprend au moins une unité de commande et/ou de régulation (28a ; 28b) qui est conçue pour contrôler et/ou réguler une température de l'unité de reformeur (16a ; 16b).

4. Dispositif de piles à combustible selon l'une des revendications précédentes, **caractérisé en ce que** l'unité de régulation de température (18b) comprend au moins un échangeur thermique (32b), branché en amont de l'unité de reformeur (16b), dans le sens de l'écoulement, qui est conçu pour ajuster une température de la partie de l'effluent cathodique (20b) introduite dans l'unité de reformeur (16b).

5. Dispositif de piles à combustible selon la revendication 4, **caractérisé en ce que**, dans l'échangeur thermique (32b) branché en amont de l'unité de reformeur (16b), il est possible d'introduire un débit volumique régulable d'un fluide de refroidissement (34b).

6. Système de piles à combustible comportant au moins un dispositif piles à combustible (10a ; 10b) selon l'une des revendications précédentes.

7. Système de piles à combustible comportant un dispositif de piles à combustible (10a ; 10b) selon l'une des revendications 1 à 5, qui est conçu pour fonctionner avec un combustible fluide (12a ; 12b) et qui comprend une unité de piles à combustible (14a ; 14b) et une unité de reformeur (16a, 16b), qui est conçue pour la production d'au moins un gaz combustible (22a ; 22b), **caractérisé en ce que** l'unité de reformeur (16a ; 16b) est régulé en température au moyen d'un effluent cathodique (20a ; 20b) de l'unité de piles à combustibles (14a ; 14b).
